(19) **Europäisches Patentamt**
**European Patent Office**
**Office européen des brevets**

(11) **EP 2 318 461 B1**

(12) **FASCICULE DE BREVET EUROPEEN**

(45) Date de publication et mention de la délivrance du brevet:
**10.08.2016 Bulletin 2016/32**

(21) Numéro de dépôt: **09782082.3**

(22) Date de dépôt: **21.08.2009**

(51) Int Cl.:
*C08L 77/02* (2006.01)     *C08L 77/06* (2006.01)
*B29B 9/12* (2006.01)     *C09K 8/588* (2006.01)
*C10G 73/02* (2006.01)     *C10G 73/04* (2006.01)
*C10G 31/09* (2006.01)     *C08L 77/00* (2006.01)
*C08L 61/04* (2006.01)     *C08L 61/10* (2006.01)
*B29K 77/00* (2006.01)     *C09K 8/80* (2006.01)
*C08G 8/08* (2006.01)     *C08L 61/06* (2006.01)

(86) Numéro de dépôt international:
**PCT/EP2009/060831**

(87) Numéro de publication internationale:
**WO 2010/023164 (04.03.2010 Gazette 2010/09)**

(54) **UTILISATION D'UNE RÉSINE NOVOLAQUE POUR AUGMENTER LA RÉSISTANCE AUX ACIDES D'UNE COMPOSITION POLYAMIDE**

VERWENDUNG EINES NOVOLAKHARZES ZUR VERBESSERUNG DER SÄUREBESTÄNDIGKEIT EINER POLYAMIDZUSAMMENSETZUNG

USE OF A NOVOLAK RESIN FOR ENHANCING THE ACID RESISTANCE OF A POLYAMIDE COMPOSITION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **25.08.2008 FR 0804684**

(43) Date de publication de la demande:
**11.05.2011 Bulletin 2011/19**

(73) Titulaire: **Rhodia Opérations**
**93306 Aubervilliers (FR)**

(72) Inventeurs:
• **ORANGE, Gilles**
**F-69390 Vourles (FR)**
• **MERCIER, Mathilde**
**F-69003 Lyon (FR)**

(74) Mandataire: **Benvenuti, Federica et al**
**Solvay S.A.**
**Département de la Propriété Intellectuelle**
**Rue de Ransbeek, 310**
**1120 Bruxelles (BE)**

(56) Documents cités:
**EP-A- 0 826 747        DE-A1- 4 308 534**
**FR-A- 2 794 467        GB-A- 1 566 802**
**US-A- 4 267 285        US-A- 4 822 373**
**US-A- 4 869 960        US-A1- 2005 069 662**

**Description**

La présente invention concerne l'utilisation d'une résine novolaque pour augmenter la résistance aux acides d'une composition polyamide. L'invention concerne aussi une composition polyamide comprenant de la résine novolaque et son utilisation pour la fabrication d'articles plastiques divers tels que par exemple des particules calibrées ou des pièces moulées par injection. Ladite composition est notamment utilisée dans le domaine de la récupération de boues, liquides et gaz présents dans des réservoirs souterrains, et en particulier dans le domaine de l'extraction d'hydrocarbures, tels que le pétrole brut ou le gaz naturel.

## ART ANTERIEUR

Les compositions thermoplastiques à base de polyamide sont des matières premières susceptibles d'être transformées en articles et pièces plastiques, notamment par divers procédés de mise en forme.

Le document US4822373 porte sur des fibres polyamides recouvertes par des résines novolaques sulfonatées afin d'améliorer la résistance aux tâches dues aux colorants acides. Le document US2005069662 concerne des articles moulés pour le transport de fuels comprenant un composé contenant du polyamide, de la résine novolaque et éventuellement un modificateur d'impact. La demande de brevet DE4308534 décrit des compositions de polyamides ignifuges contenant de la mélamine comme retardateur de flamme et une résine de phénol-aldéhyde qui sert d'agent de compatibilité pour la mélamine et d'agent de régulation de la volatilité pendant le mélange. La demande de brevet FR2794467 décrit encore des compositions polyamides ignifugées.

Dans de très nombreux domaines d'activité, il peut s'avérer nécessaire de pouvoir disposer de matériaux présentant des performances mécaniques élevées ainsi qu'une haute résistance aux acides. On peut notamment citer comme application les tuyaux et réservoirs dans le domaine automobile. Il existe aussi un besoin dans le domaine des matériaux de filtration (gravel packing) dans le cadre de l'extraction d'hydrocarbures, tels que le pétrole brut ou le gaz naturel. En effet, des matériaux thermoplastiques, notamment en polyamide, sous forme de particules calibrées, sont introduits par pompage dans des réservoirs souterrains pour agir selon un mécanisme de filtration, afin de minimiser l'écoulement de particules fines de roche, sable, et autres impuretés susceptibles d'être présentes dans le réservoir, dans les boues, liquides et gaz devant être extraits du puits. Or, ces matériaux de filtration sont nettoyés par injection d'acides ou de boues acides, notamment de type HCl et/ou HF.

Toutefois, aux vues des températures et pressions exercées sur le polyamide dans certaines applications, notamment dans le gravel packing, il est difficile de trouver des formulations, notamment à base de polyamides conventionnels, présentant de bonnes résistances aux acides et permettant de répondre au cahier des charges pour cette application dans le cadre de l'extraction d'hydrocarbures.

## INVENTION

La demanderesse a découvert de manière tout a fait surprenante que l'utilisation d'une résine novolaque dans une composition à base de polyamide permettait d'augmenter la résistance aux acides, notamment aux formulations comprenant de l'HCl et/ou HF. Un niveau optimum de compromis entre la résistance aux acides et les propriétés mécaniques est notamment obtenu lorsque la composition polyamide comprend de 5 à 40 % en poids de résine novolaque, par rapport au poids total de la composition.

Il est connu de l'art antérieur d'utiliser une résine novolaque pour apporter une stabilité dimensionnelle à une composition polyamide, notamment en évitant la reprise en eau dudit polyamide. Toutefois, il n'a jamais été mis en évidence que la résine novolaque puisse jouer un rôle sur la résistance aux acides d'une composition polyamide.

La présente invention a pour objet l'utilisation d'une résine novolaque pour augmenter la résistance aux acides HCl et/ou HF d'une composition polyamide.

L'invention est mise en oeuvre par une méthode dans laquelle on mélange en fondu au moins de la résine novolaque avec de la résine polyamide.

Par résistance aux acides, on entend notamment le maintien des propriétés mécaniques et de la masse moléculaire du polyamide et/ou une perte de masse limitée de la formulation, après une exposition à l'HCl et/ou l'HF.

Comme polyamides utilisables selon l'invention, on peut citer les polyamides et copolyamides semicristallins ou amorphes, tels que les polyamides aliphatiques, polyamides semi-aromatiques et plus généralement, les polyamides linéaires obtenus par polycondensation entre un diacide saturé aliphatique ou aromatique, et une diamine primaire saturée aromatique ou aliphatique, les polyamides obtenus par condensation d'un lactame, d'un aminoacide ou les polyamides linéaires obtenus par condensation d'un mélange de ces différents monomères. Plus précisément, ces copolyamides peuvent être, par exemple, le polyadipamide d'hexaméthylène, les polyphtalamides obtenus à partir d'acide téréphtalique et/ou isophtalique, les copolyamides obtenus à partir d'acide adipique, d'hexaméthylène diamine et de caprolactame.

Selon un mode de réalisation préférentiel de l'invention, le polyamide est choisi dans le groupe comprenant le polyamide 6, le polyamide 66, le polyamide 6.10, le polyamide 11, le polyamide 12, le polyamide 6.12, le poly(méta-xylylène adipamide) (MXD6), le polyamide 66/6T, le polyamide 66/6I, les mélanges et copolyamides, tels que le copolyamide 6.66 par exemple.

La composition qui convient dans l'utilisation selon l'invention peut également comprendre les copolyamides dérivés notamment des polyamides ci-dessus, ou les mélanges de ces polyamides ou copolyamides.

Les polyamides préférés sont le polyhexaméthylène adipamide, le polycaprolactame, ou les copolymères et mélanges entre le polyhexaméthylène adipamide et le polycaprolactame.

On utilise généralement des polyamides de poids moléculaires adaptés aux procédés de moulage par injection, par exemple d'indice de viscosité IV compris entre 100 et 160 ml/g, selon la norme ISO 307 ; bien que l'on puisse utiliser aussi des polyamides de plus faible viscosité.

La matrice polyamide peut notamment être un polymère comprenant des chaînes macromoléculaires étoiles ou H, et le cas échéant des chaînes macromoléculaires linéaires. Les polymères comprenant de telles chaînes macromoléculaires étoiles ou H sont par exemple décrits dans les documents FR2743077, FR2779730, US5959069, EP0632703, EP0682057 et EP0832149.

Selon une autre variante particulière de l'invention, la matrice polyamide de l'invention peut être un polymère de type arbre statistique, de préférence un copolyamide présentant une structure arbre statistique. Ces copolyamides de structure arbre statistique ainsi que leur procédé d'obtention sont notamment décrits dans le document WO99/03909. La matrice qui convient dans l'utilisation selon l'invention peut également être une composition comprenant un polymère thermoplastique linéaire et un polymère thermoplastique étoile, H et/ou arbre tels que décrits ci-dessus. La matrice de l'invention peut également comprendre un copolyamide hyperbranché du type de ceux décrits dans le document WO00/68298. La composition qui convient dans l'utilisation selon l'invention peut également comprendre toute combinaison de polymère thermoplastique linéaire, étoile, H, arbre, copolyamide hyperbranché tel que décrit ci-dessus.

La composition qui convient dans l'utilisation selon l'invention présente préférentiellement de 40 à 90 % en poids de polyamide, par rapport au poids total de la composition.

Les résines novolaques sont généralement des produits de condensation de composés phénoliques avec des aldéhydes ou cétones ; notamment un produit de condensation d'au moins un composé phénolique avec au moins une aldéhyde et/ou une cétone Ces réactions de condensation sont généralement catalysées par un acide ou une base.

Le polyamide qui convient dans l'utilisation selon l'invention peut comprendre une ou plusieurs types de résine novolaque différentes.

Les résine novolaques présentent généralement un degré de condensation compris entre 2 et 15.

Les composés phénoliques peuvent être choisis seuls ou en mélange parmi le phénol, le crésol, le xylénol, le naphtol, les alkylphénols, comme le butyl-phénol, le terbutyl-phénol, l'isooctyl-phénol, le nitrophénol, le phénylphénol, le résorcinol ou le biphénol A ; ou tout autre phénol substitué.

L'aldéhyde le plus fréquemment utilisé est le formaldéhyde. On peut toutefois en utiliser d'autres, tels que l'acétaldéhyde, le para-formaldéhyde, le butyraldéhyde, le crotonaldéhyde, le glycoxal, et le furfural.

Comme cétone, on peut utiliser l'acétone, la méthyle éthyle cétone ou l'acétophénone.

Selon un mode de réalisation particulier de l'invention, la résine est un produit de condensation du phénol et du formaldéhyde.

Les résines novolaques utilisées présentent avantageusement un poids moléculaire compris entre 500 et 3000 g/mol, de préférence entre 800 et 2000 g/mol.

Comme résine novolaque commerciale, on peut citer notamment les produits commerciaux Durez®, Vulkadur® ou Rhenosin®.

La composition peut comprendre de 5 à 40 % en poids de résine novolaque, plus préférentiellement de 10 à 25 % en poids, par rapport au poids total de la composition. La composition polyamide qui convient dans l'utilisation selon l'invention comprenant de la résine novolaque est notamment utilisée en tant que matrice, notamment par granulation, calandrage, injection, moulage, moulage par injection, pressage, et autres.
On peut ainsi préparer par exemple des granulés, des copeaux, des billes, des lingots, de toutes formes sphériques, aplaties, ovoïdes, en forme de goutte, de prisme, de parallélépipède, de cylindres, de coussinets, et autres. Selon un mode de réalisation, et avantageusement pour des applications en fracturation ou filtration de puits de forage, le matériau qui convient dans l'utilisation selon l'invention est avantageusement sous forme de granulés, de billes et/ou de cylindres, aplatis ou non.

En particulier, lorsque le matériau est sous forme de billes substantiellement sphériques ou ellipsoïdales, ces dernières peuvent être préparées par un procédé de coupe en tête noyée, tel que par exemple décrit dans les brevets US2918701 et US3749539 ou encore dans la demande de brevet US2005/0035483. Ce procédé met en oeuvre une tête de filière munie de trous et alimentée par la matrice thermoplastique, à l'état fondu, comprenant les charges et éventuellement un ou plusieurs des additifs tels que décrits précédemment. La tête de filière immergée est munie d'un porte-couteaux rotatif dont les lames viennent couper la matière fondu issue des trous de fiilière, le bain d'eau dans lequel est immergée la tête de coupe permettant un refroidissement rapide des billes formées.

Pour améliorer les propriétés mécaniques d'une composition polyamide qui convient dans l'utilisation selon, il peut être avantageux de lui adjoindre au moins une charge de renfort et/ou de remplissage, telles que des charges fibreuses ou non, préférentiellement choisie dans le groupe comprenant les fibres de verre, les fibres de carbone, les fibres aramides, les argiles, le kaolin, le mica, la wollastonite, la silice, le talc, le graphite, le carbure de silicium ou des nanoparticules. Le taux d'incorporation en charge de renfort et/ou de remplissage est conforme aux standards dans le domaine des matériaux composites. Il peut s'agir par exemple d'un taux de charge de 1 à 80 %, de préférence de 10 à 70 %, notamment entre 20 et 60 %.

Pour l'application « gravel packing », on préfère notamment les charges connues pour leur résistance aux acides, telles que le graphite et le carbure de silicium.

On peut par exemple utiliser une composition polyamide comprenant de 5 à 40 % en poids de résine novolaque, et de 10 à 30 % en poids de graphite ou de carbure de silicium, par rapport au poids total de la composition.

La composition polyamide peut en outre comprendre un ou plusieurs autres polymères, de préférence des polymères thermoplastiques tels que le polyamide, les polyoléfines, l'ABS ou le polyester.

La composition qui convient dans l'utilisation selon peut en outre comprendre des additifs usuellement utilisés pour la fabrication de compositions polyamides destinées à être moulées. Ainsi, on peut citer les lubrifiants, les agents ignifugeants, les plastifiants, les nucléants, les catalyseurs, les agent d'amélioration de la résilience comme des élastomères éventuellement greffés, les stabilisants lumière et/ou thermique, les antioxydants, les antistatiques les colorants, les pigments, les matifiants, les additifs d'aide au moulage ou autres additifs conventionnels.

Pour la réalisation d'une composition polyamide, ces charges et additifs peuvent être ajoutés au polyamide par des moyens usuels adaptés à chaque charge ou additif, tels que par exemple lors de la polymérisation ou en mélange en fondu. La résine novolaque est préférentiellement ajoutée au polyamide par voie fondue, notamment lors d'une étape d'extrusion du polyamide, ou par voie solide dans un mélangeur mécanique ; le mélange solide pouvant ensuite être mis en fusion, par exemple par un procédé d'extrusion.

La composition polyamide comprenant la résine novolaque peut également être utilisée, en tant qu'additif, notamment pour conférer certaines propriétés, notamment rhéologiques, dans des compositions comprenant en tant que matrice un polymère thermoplastique, notamment un (co)polyamide. L'invention concerne ainsi un procédé de fabrication d'une composition dans lequel on mélange à froid ou en fondu une composition polyamide comprenant de la résine novolaque avec une composition thermoplastique, notamment à base de (co)polyamide. Le mélange à froid peut ensuite être mis en fusion, par exemple par un procédé d'extrusion.

La composition polyamide comprenant la résine novolaque peut également comprendre une forte proportion d'additifs et être par exemple utilisée comme mélange maître (masterbatch) destiné à être mélangée à une autre composition thermoplastique, notamment à base de polyamide.

Les compositions qui convient dans l'utilisation selon peuvent être utilisées comme matière première dans le domaine des plastiques techniques, par exemple pour la réalisation d'articles obtenus par moulage par injection, par injection/soufflage, par extrusion ou par extrusion soufflage. Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de moulage par injection.

On peut citer comme articles selon l'invention, des tubes, réservoirs et récipients, tels que des tubes de refroidissement, des carters d'eau de refroidissement, des tuyaux de guidage de l'air de moteur, des tuyaux pour le circuit à huile.

Selon un autre aspect, la composition polyamide qui convient dans l'utilisation selon l'invention peut également être utilisée en tant que filtre (gravel pack) dans le domaine de la récupération de boues, liquides et gaz présents dans des réservoirs souterrains, et en particulier dans le domaine de l'extraction d'hydrocarbures, tels que le pétrole brut ou le gaz naturel. À cet effet, la composition de l'invention, avantageusement sous forme de particules calibrées telles que définies plus haut, est introduit par pompage dans le réservoir souterrain pour agir selon un mécanisme de filtration, afin de minimiser l'écoulement de particules fines de roche, sable, et autres impuretés susceptibles d'être présentes dans le réservoir, dans les boues, liquides et gaz devant être extraits du puits. Une telle opération de « gravel packing » requiert de quelques centaines de kg à quelques milliers de kg, par exemple environ 0,5 tonne à environ 5 tonnes de matériau selon l'invention. On peut notamment utiliser pour cette application des particules calibrées, telles que des granulés, des billes et/ou des cylindres aplatis ou non, présentant une granulométrie moyenne (D50) comprise entre 0,2 et 2 mm, préférentiellement comprise entre 0,5 et 1,5 mm.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

**PARTIE EXPERIMENTALE**

Les essais présentés ci-dessous sont inspirés de la norme API RP 58 (American Petroleum Institute).

Mode opératoire

1) On mélange en fondu dans une extrudeuse bi-vis du polyamide 66 et des proportions variables de résine novolaque (Rhénosin RB).
2) Des granulés sont obtenus par coupure des joncs en sortie d'extrudeuse. Des billes sont également obtenus par coupe en tête noyée.
3) 15g de billes ou de granulés sont placés dans un cristallisoir. On sèche lesdits billes ou granulés à l'étuve pendant 48h sous vide sous balayage azote à 80°C. On récupère les billes ou granulés, et on les place dans un dessiccateur pour qu'ils reviennent à température ambiante. On mesure alors la teneur en eau du polymère $m_{eau}$ avec un appareil Karl Fischer.

*Test 65°C 30 minutes dans HCL 15 %*

On pèse 5 g d'échantillon à tester avec une balance laboratoire D 329 METTLER AE 240 (précision $3.10^{-3}$ g). On obtient ainsi la *masse initiale $m_{poymère}°$*. On place l'échantillon dans un réacteur de 250 ml à fond plat. On ajoute 100 ml de solution d'acide chlorhydrique à 15% (solution préparée par dilution d'une solution d'acide chlorhydrique à 30%). L'éprouvette utilisée présente une précision de +/- 1.0 ml à 20°C. On referme le réacteur. Le test se réalise sans agitation. On met un léger balayage d'azote (vérification grâce au bulleur à l'entrée et à la sortie du réacteur). On plonge le réacteur dans le bain d'huile à 65°C et on met en route le chronomètre dès l'immersion du réacteur. Le test dure 30 min.

En fin de test, on démonte le réacteur et on filtre la solution sur un papier filtre plissé. On rince à l'eau déminéralisée et on mesure le pH.

On récupère la substance filtré que l'on place dans un bécher. On ajoute 200 ml d'eau déminéralisée avec un agitateur magnétique et l'on place le bécher sur une plaque d'agitation pendant une heure. On vérifie alors le pH avec du papier pH pour suivre l'évolution de la concentration en HCl. On refait le lavage deux fois en notant le pH de chaque fin de lavage.

A la fin des lavages, on récupère la substance dans une capsule en aluminium. On laisse la substance une nuit sous hotte ventilée. On pèse enfin le papier filtre.

On sèche la substance à l'étuve pendant 48h sous vide sous balayage azote à 80°C. On place alors la substance dans un dessiccateur pour qu'il revienne à température ambiante. On pèse la substance et on obtient ainsi la *masse finale $m_{polymère}^f$*.

Remarque : Un dosage des chlorures après le test sur plusieurs échantillons a été effectué. Il reste environ 0,12 % de Cl⁻ dans l'échantillon. Le dosage d'eau indique une teneur en eau d'environ 0,42 % après le test acide.

*Expression des résultats*

On mesure la perte de masse (PM) par la relation suivante :

$$PM = [(m_{poymère}° - m_{polymère}^f)/ m_{poymère}°] * 100 \pm 0.5\%$$

On observe une perte de masse de 11 % avec une composition comprenant un polyamide 66, une perte de masse de seulement 0,7% avec une composition comprenant un polyamide 66 et 25 % en poids de résine novolaque, et une perte de masse de seulement 1,5 % avec une composition comprenant un polyamide 66 et 10 % en poids de résine novolaque (novolaque en poids, par rapport au poids total de la composition).

**Revendications**

1. Utilisation d'une résine novolaque, produit de condensation d'un composé phénolique avec une aldéhyde ou une cétone, pour augmenter la résistance d'une composition polyamide aux acides HCl et/ou HF.

**2.** Utilisation selon la revendication 1, **caractérisée en ce que** le polyamide est choisi dans le groupe comprenant le polyamide 6, le polyamide 66, le polyamide 6.10, le polyamide 11, le polyamide 12, le polyamide 6.12, le poly(méta-xylylène adipamide), le polyamide 66/6T, et le polyamide 66/6I.

**3.** Utilisation selon la revendication 1 ou 2, **caractérisée en ce que** ladite composition comprend de 40 à 90 % en poids de polyamide, par rapport au poids total de la composition.

**4.** Utilisation selon l'une quelconque des revendications 1 à 3, **caractérisée en ce que** la composition comprend de 5 à 40 % en poids de résine novolaque, par rapport au poids total de la composition.

**5.** Utilisation selon l'une quelconque des revendications 1 à 4, **caractérisée en ce que** la résine novolaque présente un degré de condensation compris entre 2 et 15.

**6.** Utilisation selon l'une quelconque des revendications 1 à 5, caractérisée en ce la résine novolaque est un produit de condensation du phénol et du formaldéhyde.

**7.** Utilisation selon l'une quelconque des revendications 1 à 6, **caractérisée en ce que** la résine novolaque présente un poids moléculaire compris entre 500 et 3000 g/mol, de préférence entre 800 et 2000 g/mol.

**8.** Utilisation selon l'une quelconque des revendications 1 à 7, **caractérisée en ce que** la composition polyamide comprend au moins une charge de renfort et/ou de remplissage, choisie dans le groupe comprenant les fibres de verre, les fibres de carbone, les fibres aramides, les argiles, le kaolin, le mica, la wollastonite, la silice, le talc, le graphite, le carbure de silicium ou des nanoparticules.

**Patentansprüche**

**1.** Verwendung eines Novolakharzes, bei dem es sich um ein Kondensationsprodukt einer Phenol verbindung und eines Aldehyds oder eines Ketons handelt, zur Erhöhung der Beständigkeit einer Polyamid zusammensetzung gegenüber den Säuren HCl und/oder HF.

**2.** Verwendung nach Anspruch 1, **dadurch gekennzeichnet, dass** das Polyamid aus der Gruppe umfassend Polyamid 6, Polyamid 66, Polyamid 6.10, Polyamid 11, Polyamid 12, Polyamid 6.12, Poly(meta-xylylenadipamid), Polyamid 66/6T und Polyamid 66/61 ausgewählt ist.

**3.** Verwendung nach Anspruch 1 oder 2, **dadurch gekennzeichnet, dass** die Zusammensetzung 40 bis 90 Gew.-% Polyamid, bezogen auf das Gesamtgewicht der Zusammensetzung, umfasst.

**4.** Verwendung nach einem der Ansprüche 1 bis 3, **dadurch gekennzeichnet, dass** die Zusammensetzung 5 bis 40 Gew.-% Novolakharz, bezogen auf das Gesamtgewicht der Zusammensetzung, umfasst.

**5.** Verwendung nach einem der Ansprüche 1 bis 4, **dadurch gekennzeichnet, dass** das Novolakharz einen Kondensationsgrad zwischen 2 und 15 aufweist.

**6.** Verwendung nach einem der Ansprüche 1 bis 5, **dadurch gekennzeichnet, dass** es sich bei dem Novolakharz um ein Kondensationsprodukt von Phenol und Formaldehyd handelt.

**7.** Verwendung nach einem der Ansprüche 1 bis 6, **dadurch gekennzeichnet, dass** das Novolakharz ein Molekulargewicht zwischen 500 und 3000 g/mol und vorzugsweise zwischen 800 und 2000 g/mol aufweist.

**8.** Verwendung nach einem der Ansprüche 1 bis 7, **dadurch gekennzeichnet, dass** die Polyamid zusammensetzung mindestens einen verstärkenden und/oder streckenden Füllstoff aus der Gruppe umfassend Glasfasern, Kohlefasern, Aramidfasern, Tone, Kaolin, Glimmer, Wollastonit, Siliciumdioxid, Talk, Graphit, Siliciumcarbid oder Nanopartikel umfasst.

**Claims**

1. Use of a novolac resin, condensation product of a phenolic compound with an aldehyde or a ketone, for increasing the resistance of a polyamide composition to HCl and/or HF acids.

2. Use according to Claim 1, **characterized in that** the polyamide is selected from the group consisting of the polyamide PA-6, the polyamide PA-6,6, the polyamide PA-6,10, the polyamide PA-11, the polyamide PA-12, the polyamide PA-6,12, poly(meta-xylylene adipamide), the polyamide PA-6,6/6,T, and the polyamide PA-6,6/6,I.

3. Use according to Claim 1 or 2, **characterized in that** said composition comprises from 40 to 90% by weight of polyamide, relative to the total weight of the composition.

4. Use according to any one of Claims 1 to 3, **characterized in that** the composition comprises from 5 to 40% by weight of novolac resin, relative to the total weight of the composition.

5. Use according to any one of Claims 1 to 4, **characterized in that** the novolac resin has a degree of condensation between 2 and 15.

6. Use according to any one of Claims 1 to 5, **characterized in that** the novolac resin is a condensation product of phenol and formaldehyde.

7. Use according to any one of Claims 1 to 6, **characterized in that** the novolac resin has a molecular weight comprised between 500 and 3000 g/mol, preferably between 800 and 2000 g/mol.

8. Use according to any one of Claims 1 to 7, **characterized in that** the polyamide composition comprises at least one reinforcing and/or bulking filler, selected from the group consisting of glass fibers, carbon fibers, aramid fibers, clays, kaolin, mica, wollastonite, silica, talc, graphite, silicon carbide and nanoparticles.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4822373 A
- US 2005069662 A
- DE 4308534
- FR 2794467
- FR 2743077
- FR 2779730
- US 5959069 A
- EP 0632703 A
- EP 0682057 A
- EP 0832149 A
- WO 9903909 A
- WO 0068298 A
- US 2918701 A
- US 3749539 A
- US 20050035483 A